# EUROPÄISCHE PATENTANMELDUNG

(11) **EP 4 335 906 A1**
(43) Veröffentlichungstag der Anmeldung: **13.03.2024**
(21) Anmeldenummer: 22194792.2
(22) Anmeldetag: 09.09.2022
(51) Int. Cl.: C09D 5/00, C09D 5/18

(54) **INTUMESZIERENDE ZUSAMMENSETZUNG AUF EPOXID-BASIS MIT VERBESSERTEN BRANDSCHUTZEIGENSCHAFTEN UND DEREN VERWENDUNG**

(71) Anmelder: Hilti Aktiengesellschaft, 9494 Schaan (LI)
(72) Erfinder: Mayr, Florian, 86444 Affing (DE); Fischer Herrera, Theresa, 86899 Landsberg am Lech (DE); Farras Gutierrez, Hector, 86507 Oberottmarshausen (DE)
(74) Vertreter: Hilti Aktiengesellschaft Corporate Intellectual Property

(57) **Zusammenfassung**

Es wird eine intumeszierende Zusammensetzung beschrieben, enthaltend (a) wenigstens eine Verbindung mit wenigstens zwei Epoxidgruppen, (b) wenigstens eine Verbindung mit mindestens zwei Aminogruppen, die mit den Epoxidgruppen reagieren können, (c-1) Intumeszenzadditive ausgewählt aus der Gruppe bestehend aus Treibmittel und Dehydrierungskatalysator und Kombinationen davon und/oder (c-2) eine thermisch expandierbare Verbindung und (d) wenigstens einen Weichmacher, wobei die ausgehärtete Zusammensetzung im Brandfall eine isolierende Schicht bildet.

## Beschreibung

Die vorliegende Erfindung betrifft eine intumeszierende Zusammensetzung, insbesondere eine Brandschutzzusammensetzung mit intumeszierenden Eigenschaften, die ein Bindemittel auf Basis Epoxidharzverbindung enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Brandschutzzusammensetzungen, auch intumeszierende Brandschutzzusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Dies wird erreicht, indem die Beschichtung bei Einwirkung von großer Hitze, wie etwa im Brandfall, expandiert und eine Ascheschicht bildet, die isolierend wirkt und die verhindert, dass die Hitze für einen bestimmten Zeitraum von dem Bauteil abgehalten wird.

Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren verschiedene Systeme, wobei ein großer Teil der am Markt erhältlichen Produkte auf Basis von wasserbasierten Dispersionen erhältlich ist.

Dämmschichtbildende Beschichtungen können aber auch auf Epoxidharz-Basis vorliegen. Diese Art der Beschichtung benötigt immer eine Komponente, die als Härter mit in das System zugegeben wird, um so eine Aushärtung der Beschichtung zu gewährleisten. Aus diesem Grund handelt es sich bei diesen Beschichtungen um zweikomponentige Produkte. Derartige Beschichtungen sind etwa aus der GB 1575708 A1, GB 2121056 A1, DE 102006056403 A1, EP 3085744 A1 und EP 0295496 A2 bekannt.

Aus der WO 20/253732 A1 ist eine isolierende Beschichtungszusammensetzung, die eine chemisch modifizierte Epoxidharz-Komponente, ein Härtungsmittel, verstärkende Fasern und Füllstoffe geringer Dichte umfasst, für den Schutz von Stahlbauteilen vor zu schnellem Temperaturabfall beschrieben.

Die Epoxidharz-Beschichtungen, wie sie für dämmschichtbildende Anwendungen verwendet werden, zeichnen sich oft durch gute Haftung an Substraten, wie Bauteile, große Härte und Beständigkeit gegen thermische Zersetzung und gegenüber dem Angriff durch korrodierende Chemikalien aus. Allerdings haben die Epoxidharz-Beschichtungen hinsichtlich Konstruktionsanwendungen, auch Nachteile, die deren Anwendung limitieren, insbesondere für den Brandschutz. So entwickelt sich im Brandfall eine äußerst kompakte und harte Asche, welche nur eine unzureichende isolierende Wirkung hat und leicht abgetragen werden kann. Daher sind die Brandschutzeigenschaften dieser Beschichtungen oft nicht ausreichend, die eingangs erwähnten Anforderungen zu erfüllen.

Es besteht daher Bedarf an Epoxidharz-Beschichtungen, welche die genannten Nachteile nicht aufweisen, die insbesondere eine bessere isolierende Asche bilden und so den Anforderungen der behördlichen Bestimmungen genügen.

Der vorliegenden Erfindung liegt die Aufgabe zugrunde, die Brandschutzeigenschaften von intumeszierenden Epoxidharz-Beschichtungen zu verbessern. Insbesondere besteht die Aufgabe darin, die Härte der im Brandfall gebildeten Aschekruste zu verringern und damit die isolierende Wirkung der Aschekruste zu erhöhen, verglichen mit den bekannten und auf dem Markt befindlichen Epoxidharz-Beschichtungen.

Diese Aufgabe wird durch eine Zusammensetzung nach Anspruch 1 gelöst. Bevorzugte Ausführungsformen sind den Unteransprüchen zu entnehmen.

Die erzielten Vorteile bestehen insbesondere darin, dass durch die Zugabe eines Weichmachers zu einer Epoxid-Amin-basierten Zusammensetzung im Brandfall eine signifikante Verbesserung der Aschestruktur und damit auch eine Verbesserung der Brandperformance ermöglicht werden kann.

Ein erster Gegenstand der Erfindung ist daher eine intumeszierende Zusammensetzung, enthaltend (a) wenigstens eine Verbindung mit wenigstens zwei Epoxidgruppen, (b) wenigstens eine Verbindung mit mindestens zwei Aminogruppen, (c-1) Intumeszenzadditive ausgewählt aus der Gruppe bestehend aus Treibmittel, und Dehydrierungskatalysator und Kombinationen davon und/oder (c-2) eine thermisch expandierbare Verbindung und (d) wenigstens einen Weichmacher, wobei die ausgehärtete Zusammensetzung im Brandfall eine isolierende Schicht bildet.

Ein weiterer Gegenstand der Erfindung ist die Verwendung der Zusammensetzung als Brandschutzbeschichtungszusammensetzung.

Ein noch weiterer Gegenstand der Erfindung ist die Verwendung eines Weichmachers in einer Epoxid-amin-basierten Brandschutzzusammensetzung zur Verbesserung der Stabilität und Struktur und damit der Beständigkeit der in Brandfall gebildeten Aschekruste.

Zum besseren Verständnis der Erfindung werden die folgenden Erläuterungen der hierin verwendeten Terminologie als sinnvoll erachtet. Im Sinne der Erfindung:
- bedeutet *"intumeszierende Zusammensetzung"* eine härtbare Mischung, die ein intumeszierendes Beschichtungsmaterial bzw. Beschichtung bereitstellt, insbesondere eine Mischung mit einem Bindemittel aus miteinander reagierenden Bestandteilen, wie ein Epoxidharz und ein Härtungsmittel, beispielsweise eine Aminoverbindung, und weiteren Bestandteilen, wie Additiven und Füllstoffen;
- bedeutet *"Brandschutzbeschichtung"* eine Beschichtung zum Zwecke des Brandschutzes, wobei der Brandschutz darin besteht, ein damit beschichtetes Substrat vor Hitzeeinwirkung zu schützen;
- bedeutet *"multifunktionell",* dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-funktionalisierte Verbindungen, dass diese wenigstens zwei Thiolgruppen pro Molekül aufweisen; die Gesamtzahl der jeweiligen funktionellen Gruppen ist die Funktionalität der entsprechenden Verbindung;
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet *"dämmschichtbildend",* dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;
- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "Kohlenstoffgerüstbildner" bezeichnet;
- ist ein *"Säurebildner"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- ist ein *"Treibmittel"* eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit *"Gasbildner"* verwendet;
- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- Bedeutet *"Epoxidäquivalentmasse"* diejenige Menge an Epoxidharz in [g], die ein Äquivalent [Val] Epoxidfunktionen besitzt und berechnet sich aus der Molmasse M in [g/Mol] dividiert durch die Funktionalität f in [Val/Mol]; (EEW [g/Val]).

### Weichmacher (d)

Erfindungsgemäß enthält die intumeszierende Zusammensetzung einen Weichmacher.

Überraschend hat sich gezeigt, dass ein Weichmacher in einer Epoxid-Amin-basierten intumeszierenden Zusammensetzung mehrere Vorteile mit sich bringt.

Die Erfinder haben herausgefunden, dass der Weichmacher mehrere Vorteile bringt. So macht er nicht nur die ausgehärtete Beschichtung weicher, sondern verändert im Brandfall auch die Aschestruktur deutlich. Wohingegen die Aschestruktur ohne Weichmacher sehr laminar und plättchenförmig ist und sehr schnell zerfällt oder verblasen wird, so dass kein hinreichender Schutz des vor Hitze zu schützenden Subtrats mehr gewährleistet ist. Außerdem neigt eine harte oder spröde Aschekruste dazu, Risse zu bilden, was die isolierende Wirkung weiter herabsetzt.

Die Brandschutzbeschichtung mit Weichmachern bildet im Brandfall eine schwammartige Zellstruktur der gebildeten Asche aus. Dadurch wird zum einen die Ascheschicht deutlich stabiler und zum anderen erhöht sich die isolierende Wirkung durch die gebildeten Zellen. Zudem ist die gebildete Asche deutlich weicher und flexibler als die Ascheschichten von Beschichtungen ohne Weichmacher. Dadurch kann die Neigung zu Rissbildung in der Ascheschicht verringert und somit die isolierende Wirkung länger aufrechterhalten werden. Dies führt zu einer Verbesserung der Brandschutzeigenschaften, was sich in einer Verlängerung der Zeit bis zum Versagen (TTF) um bis zu 7,5 % zeigt.

Ein weiterer Vorteil der Zugabe des Weichmachers ist, dass die Viskosität der Zusammensetzung verringert wird, so dass keine Lösungsmittel, welche flüchtig sind (VOCs) und einen negativen Einfluss auf die Umwelt und den Anwender haben, mehr eingesetzt werden müssen, um die Viskosität der Zusammensetzung auf einen geeigneten Wert einzustellen.

Geeignete Weichmacher sind Derivate der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Phophorsäure und Zitronensäure, Alkylphosphatester und Derivate von Polyestern, Polyethern und Epoxiden und dergleichen, C₁₀-C₂₁-Alkylsulfonsäureester des Phenols, Polyester, erhältlich aus linearen oder verzweigten, gesättigten oder ungesättigten C₆-C₂₁-Monocarbonsäuren und multifunktionellen Alkoholen bzw. deren ethoxylierten Derivaten, und alicyclischen Carbonsäureestern.

In einer bevorzugten Ausführungsform ist der Weichmacher aus der Gruppe bestehend aus Carbonsäureestern, wie Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), Terephthalate, insbesondere Dioctylterephthalat, Trimellitate, Adipate, insbesondere Dioctyladipat, Azelate, Sebacate, Polyole, insbesondere Polyoxyalkylenpolyol oder Polyesterpolyole, Benzoate, Glycolether, Glycolester, organische Phosphate, Phosphonate oder Sulfonate, Polybuten, Polyisobutylen oder Weichmacher, die von natürlichen Fetten oder Ölen, insbesondere von epoxidiertem Sojabohnenöl oder Leinsamenöl, abgeleitete sind.

Besonders bevorzugt sind Phophorsäureester, Citratester und Phthalate, insbesondere Diisononylphthalat (DINP), Diisodecylphthalat (DIDP) oder Di(2-propylheptyl)phthalat (DPHP), hydrierte Phthalate, insbesondere hydriertes Diisononylphthalat (DINCH), wobei das hydrierte Diisononylphthalat (DINCH) ganz besonders bevorzugt ist.

Hinsichtlich der Verbesserung der Aschestruktur kann der Weichmacher bis zu 10 Gew.-%, bezogen auf das Gesamtgewicht der intumeszierenden Zusammensetzung, enthalten sein.

Hinsichtlich der Verbesserung der Brandperformance ist der Weichmacher bevorzugt in einer Menge von 2 Gew.-% bis zu 10 Gew.-%, bevorzugt von 2 Gew.-% bis 7,5 Gew.-%. Jeweils bezogen auf das Gesamtgewicht der intumeszierenden Zusammensetzung, enthalten.

### Epoxidharz (a)

Als Verbindung (a) mit wenigstens zwei Epoxidgruppen (hierin auch als Epoxidharz bezeichnet), sind in der Epoxidchemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Als geeignete Epoxidharze seien beispielhaft erwähnt: Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;
sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Produkte der Glycidylisierung von:
- Dihydroxybenzol-Derivaten, wie Resorcin, Hydrochinon und Brenzkatechin;
- weiteren Bisphenolen oder Polyphenolen, wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;

- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol A mit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox^{®} A 17-01, Epilox^{®} A 18-00, Epilox^{®} A 19-00, Epilox^{®} A 19-02, Epilox^{®} A 19-03 oder Epilox^{®} A 19-04 der Leuna-Harze GmbH, dargestellt durch die nachfolgende Formel, worin 0 ≤ n ≤ 0,2;

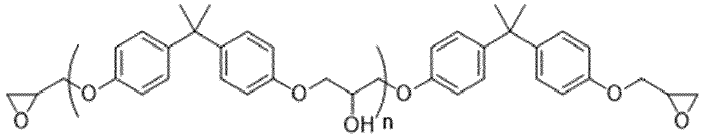

Reaktionsprodukte von Epichlorhydrin mit Bisphenol F, dem einfachsten Vertreter der Novolake, mit einem EEW ≤ 185 g/Val, wie beispielsweise Epilox^{®} F 16-01 oder Epilox^{®} F 17-00 der Leuna-Harze GmbH, dargestellt durch die nachfolgende Formel, worin 0 ≤ n ≤ 0,2; 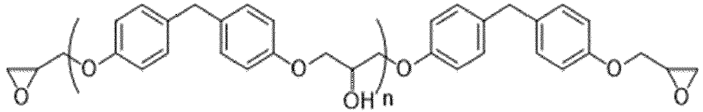 sowie Gemische zweier oder mehrerer derartiger Epoxidharze in beliebigem Verhältnis und in beliebigen Reinheitsgraden, wie beispielsweise Epilox^{®} AF 18-30, Epilox^{®} 18-50 oder Epilox^{®} T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Verbindung (a) kann jeweils eine einzelne Verbindung (a) oder ein Gemisch von zwei oder mehreren, unterschiedlichen Verbindungen (a) eingesetzt werden.

Die Verbindung (a) mit wenigstens zwei Epoxidgruppen ist vorzugsweise in einer Menge von 9 bis 20 Gew.-%, bevorzugt 10 bis 19 Gew.-% und stärker bevorzugt 11 bis 18 Gew.-%, bezogen auf das Gesamtgewicht der Zusammensetzung, in der intumeszierenden Zusammensetzung enthalten.

### Aminoverbindungen (b)

Die wenigstens eine Verbindung (b) mit mindestens zwei Aminogruppen (hierin auch Aminoverbindung(en) genannt) kann im Prinzip aus niedermolekularen Materialien, Oligomeren oder polymeren Materialien ausgewählt sein. Die Aminoverbindung kann primäre und/oder sekundäre Aminogruppen aufweisen, wobei die Aminoverbindung bevorzugt 2 bis 10, stärker bevorzugt 2 bis 6 Aminogruppen pro Molekül und 2 bis 200 Kohlenstoffatome aufweist.

Als Aminoverbindung ist ein geradkettiges oder verzweigtes, gegebenenfalls substituiertes aliphatisches oder alicyclisches Alkylradikal mit mindestens einer, bevorzugt jedoch zwei oder mehr primären und/oder sekundären Aminogruppen geeignet. Die Aminoverbindungen mit zwei oder mehr Aminogruppen werden hierin auch als Polyamine bezeichnet.

Im Sinne der Erfindung bedeutet: *"aliphatisch"* eine acyclische oder cyclische, gesättigte oder ungesättigte Kohlenstoffverbindungen, ausgenommen aromatische Verbindungen; *"alicyclisch"* eine Verbindung mit einer carbocyclischen Ringstruktur, ausgenommen Benzolderivate oder andere aromatische Systeme; und *"aromatisch"* eine Verbindung, die der Hückel (4n+2)-Regel folgen; und *"Amine"* Verbindungen, die durch Austausch von einem, zwei oder drei Wasserstoffatomen durch Kohlenwasserstoffgruppen aus Ammoniak abgeleitet sind und die allgemeinen Strukturen RNH₂ (primäre Amine), R₂NH (sekundäre Amine) und R₃N (tertiäre Amine) haben (IUPAC. Compendium of Chemical Terminology, 2nd ed. (the "Gold Book"). Compiled by A. D. McNaught and A. Wilkinson. Blackwell Scientific Publications, Oxford (1997)).

Geeignete Beispiele für Polyamine mit zwei Aminogruppen umfassen Diamine, wie Ethylendiamin, Propylendiamin, Butylendiamin, Pentamethylendiamin, Hexamethylendiamin, Decamethylendiamin, 4,7-Dioxadecan-1,10-diamin, Dodecamethylendiamin, 4,9-Dioxadodecan-1,12-diamin, 7-Methyl-4,10-dioxatridecane-1,13-diamin, 1,2-Diaminocyclohexan, 1,4-Diaminocyclohexan, 4,4'-Diaminodicyclohexylmethan, 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Isophorondiamin, Bis(3-methyl-4-aminocyclohexyl)methan, Harnstoff, 2,2-Bis(4-aminocyclohexyl)propan, 3-Amino-1-(methylamino)-propan, 3-Amino-1-(cyclohexylamino)propan und N-(2-Hydroxyethyl)ethylendiamin.

Die Amine können sowohl einzeln als auch im Gemisch von zwei oder mehreren der genannten Amine eingesetzt werden.

Geeignete Beispiele für Polyamine mit drei Aminogruppen pro Molekül umfassen Polyamine wie Tris(2-aminoethyl)amin, Bis(3-aminopropyl)methylamin, Melamin und Polyetheramine, wie Produkte der JEFFAMINE^{®} (eingetragenes Warenzeichen) ED- und T-Serie, wie sie durch folgende Formel dargestellt sind: 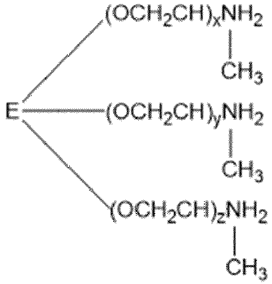 wobei E der Rest eines aliphatischen Triols und x, y und z ganze Zahlen sind, deren Summe von 5 bis 85 ist, wobei die Summe keine ganze Zahl sein muss, wenn das Produkt ein Gemisch von Verbindungen mit unterschiedlichen x, y und/oder z ist. Die Produkte der JEFFAMINE ^{®} D-Serie mit 2 Aminogruppen sind ebenfalls geeignet.

Andere geeignete Polyamine mit drei bis zehn Aminogruppen pro Molekül sind Polyalkylenpolyamine der Formel:

H₂N-(R^{'}NH)ₙ-R^{"}-NH₂

worin R^{'} und R^{"} gleich oder verschieden sein können und (Cyclo)Alkylen-Gruppen mit 1 bis 6, vorzugsweise 1 bis 4 Kohlenstoffatomen darstellen und n eine ganze Zahl zwischen 1 und 8 und vorzugsweise zwischen 1 und 4 darstellt. Beispiele derartiger Polyamine sind: Diethylentriamin, Dipropylentriamin und Dibutylentriamin.

Andere geeignete Polyamine, die verwendet werden können, umfassen Addukte von Aminoverbindungen mit eine polyfunktionellen Epoxy-, Isocyanat-, Maleinat-, Dimalat- oder (Meth)acryloylverbindung, so dass die resultierende Verbindung zwei oder mehr Aminogruppen (primäre oder sekundäre) pro Molekül aufweist. Einige Beispiele derartiger Polyamine sind dem U.S. Patent 4,772,680 offenbart.

Es wäre auch möglich Polyhydrazide wie die Dicarbonsäurebishydrazide der Formel: 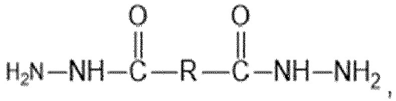 worin R eine kovalente Bindung oder eine Polyalkylen-, vorzugsweise Polymethylen-, oder alicyclische Gruppe mit 1 bis 34 Kohlenstoffatomen als Polyaminverbindung einzusetzen. Beispiele für geeignete Dihydrazide umfassen: Oxalsäuredihydrazid, Malonsäure-dihydrazid, Bernsteinsäure-dihydrazid, Glutarsäure Dihydrazid Adipinsäuredihydrazid, Cyclohexan-dicarbonsäure-bis-hydrazid, Azelainsäure Bishydrazid und Sebacinsäuredihydrazid.

Die Polyaminverbindung kann grundsätzlich auch ein organisches Polymer mit durchschnittlich mindestens zwei Aminogruppen pro Molekül sein, beispielsweise ein olefinisches Polymer, ein Polyester-Polymer oder ein Polyurethan-Polymer mit seitenständigen und/oder endständigen Amino Gruppen (gewöhnlich mindestens lateralen Aminogruppen). Solch ein Polymer ist, insbesondere ein olefinisches Polymer, das mindestens laterale Aminogruppen aufweist.

Ein olefinisches Polymer, das die Aminogruppen entlang der Kohlenstoffkette aufweist, ist vorzugsweise ein Copolymer, das hergestellt wird, indem zuerst unter Anwendung eines radikalisch initiierten Polymerisationsverfahren, ein Vorläufer-Copolymer, das polymerisierte Einheiten mindestens eines olefinisch ungesättigten Monomers mit einer Amin gebildet Vorläufergruppe (n) (d.h. eine Gruppe, die anschließend umgesetzt werden kann, um eine Amino-Seitengruppe zu liefern) und mindestens ein anderes olefinisch ungesättigtes Monomer (z. B. einem Monomer, das eine Aminvorläufergruppe nicht zur Verfügung stellt), und anschließend Umsetzen von mindestens einem Anteil der Aminvorläufergruppen von der Kette abhängende funktionelle Aminogruppen bereitzustellen. Zum Beispiel können die Vorläufergruppen der Aminogruppen Carboxylgruppen sein, die durch eine Iminierungsreaktion mit einem Alkylenimin, wie Ethylenimin oder Propylenimin, umgewandelt werden, um Aminogruppen bereitzustellen.

Alternativ oder zusätzlich zu den genannten Aminoverbindungen können als Härtungsmittel oder Co-Härtungsmittel für das Epoxidharz auch Amidgruppen-haltige Polyamine, sogenannte Polyamidoamine, eingesetzt werden, die aus der Umsetzung von Dicarbonsäuren mit überschüssigem Polyamin erhältlich sind. Als Ausgangsprodukte zur Herstellung der Polyamidoamide können insbesondere Fettsäuren mit 8 bis 24 Kohlenstoffatomen und einer oder mehreren Dicarbonsäuregruppen dienen. Die Polyamine sind insbesondere aus der Gruppe der aliphatischen Polyamine ausgewählt, wie beispielsweise Ethylendiamin, Diethylentriamin, Triethylentetramin und Tetraethylenpentamin. Geeignete Polyamidoamine sind im Handel erhältlich, beispielsweise unter den Markennamen Versamid^{®} (von Cognis), Aradur^{®} (von Huntsman), Euretek^{®} (von Huntsman), Beckopox^{®} (von Cytec) und Hexamoll^{®} (von BASF).

In einer bevorzugten Ausführungsform der Erfindung ist die Verbindung mit mindestens zwei Aminogruppen aus der Gruppe bestehend aus Ethylendiamin, Propylendiamin, Butylendiamin, Pentamethylendiamin, Hexamethylendiamin, Decamethylendiamin, 4,7-Dioxadecan-1,10-diamin, Dodecamethylendiamin, 4,9-Dioxadodecan-1,12-diamin, 7-Methyl-4,10-dioxatridecane-1,13-diamin, 1,2-Diaminocyclohexan, 1,4-Diaminocyclohexan, 4,4'-Diaminodicyclohexylmethan, 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Isophorondiamin, Bis(3-methyl-4-aminocyclohexyl)methan, Harnstoff, 2,2-Bis(4-aminocyclohexyl)propan, 3-Amino-1-(methylamino)-propan, 3-Amino-1-(cyclohexylamino)propan und N-(2-Hydroxyethyl)ethylendiamin, Polyetheraminen, Amidgruppen-haltige aliphatische Polyamine und Mischungen aus zwei oder mehreren davon ausgewählt.

Ganz besonders bevorzugt ist die Aminoverbindung aus der Gruppe bestehend aus 1,3-Bis(aminomethyl)cyclohexan (1,3-BAC), oligomerisierten Polyetheraminen und Amidgruppen-haltigen aliphatischen Polyaminen ausgewählt, insbesondere die in den Beispielen verwendeten Verbindungen (b).

Als Aminoverbindung (b) kann jeweils eine Verbindung (b) oder ein Gemisch von zwei oder mehreren, unterschiedlichen Verbindungen (b) eingesetzt werden.

Die Verbindung (b) mit wenigstens zwei Aminogruppen ist vorzugsweise in einer Menge von 0,8 bis 4,0 Gew.-%, bevorzugt 1,5 bis 3,5 Gew.-% und stärker bevorzugt 2,0 bis 3,0 Gew.-%, bezogen auf das Gesamtgewicht der Zusammensetzung, in der intumeszierenden Zusammensetzung enthalten. Wird ein Gemisch an Verbindungen (b) mit wenigstens zwei Aminogruppen eingesetzt, so beziehen sich diese Mengen auf das Gemisch.

### Intumeszenzadditive (c-1)

Erfindungsgemäß enthält die Zusammensetzung Intumeszenzadditive, sogenannte dämmschichtbildenden Additive, wobei sowohl einzelne Verbindungen als auch ein Gemisch von mehreren Verbindungen umfasst sein kann.

Zweckmäßig werden als Intumeszenzadditive solche eingesetzt, die durch die Bildung einer sich unter Hitzeeinwirkung bildenden, aufgeblähten, isolierenden Schicht aus schwerentflammbarem Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils allein oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator eine Säure gebildet, die als Katalysator für die Carbonifizierung des Kohlenstofflieferanten oder des Bindemittels dient. Gleichzeitig zersetzt sich das Treibmittel thermisch unter Bildung inerter Gase, die ein Aufblähen des karbonisierten (verkohlten) Materials und gegebenenfalls des erweichten Bindemittels unter Bildung eines voluminösen, isolierenden Schaums bewirkt.

In einer Ausführungsform der Erfindung, in der die isolierende Schicht durch chemische Intumeszenz gebildet werden soll und in der das Bindemittel als Kohlenstoffgerüstbildner (Kohlenstofflieferant) fungiert, umfassen die Intumeszenzadditive mindestens einen Säurebildner und mindestens ein Treibmittel.

In einer weiteren Ausführungsform der Erfindung, in der die isolierende Schicht durch chemische Intumeszenz gebildet werden soll, umfassen die Intumeszenzadditive mindestens einen Dehydrierungskatalysator (Säurebildner), mindestens ein Treibmittel und mindestens einen anorganischen Gerüstbildner.

Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

Die Intumeszenzadditive (c-1) können in einer Menge von 30 bis 70 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil in der Gesamtformulierung so hoch wie möglich eingestellt. Bevorzugt beträgt der Anteil der Intumeszenzadditive (c-1) in der Gesamtformulierung 35 bis 70 Gew.-% und besonders bevorzugt 40 bis 70 Gew.-%, bezogen auf das Gesamtgewicht der intumeszierenden Zusammensetzung.

### Physikalisch wirkende Intumeszenzadditive (c-2)

In einer Ausführungsform der Erfindung, in der die isolierende Schicht durch physikalische Intumeszenz gebildet wird, umfassen die intumeszierende Zusammensetzung mindestens eine thermisch expandierbare Verbindung, wie eine Graphit-Interkallationsverbindung, die auch als Blähgraphit bekannt sind, als physikalisch wirkendes Intumeszenzadditiv (c-2) (auch physikalisches Intumeszenzadditiv (c-2)). Diese kann ebenfalls in das Bindemittel eingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1.

Das physikalische Intumeszenzadditiv (c-2) ist vorzugsweise in einer Menge von 30 bis 70 Gew.-%, bevorzugt 35 bis 70 Gew.-% und stärker bevorzugt 40 bis 70 Gew.-%, bezogen auf das Gesamtgewicht der Zusammensetzung, in der intumeszierenden Zusammensetzung enthalten.

Sind sowohl die Intumeszenzadditive (c-1) als auch das physikalische Intumeszenzadditiv (c-2) in der intumeszierenden Zusammensetzung enthalten, so können beide zusammen in einer Menge von 30 bis 70 Gew.-% in der Zusammensetzung enthalten sein. Bevorzugt beträgt der Anteil der beiden Intumeszenzadditive (c-1) und (c-2) zusammen in der Gesamtformulierung 35 bis 70 Gew.-% und besonders bevorzugt 40 bis 70 Gew.-%, bezogen auf das Gesamtgewicht der intumeszierenden Zusammensetzung.

### Zusätzliche Aschekrustenstabilisatoren

Um die im Brandfall gebildete Aschekruste zusätzlich zu stabilisieren bzw. zu härten kann neben den eben aufgeführten Intumeszenzadditiven und dem Weichmacher ferner ein Aschekrustenstabilisator bzw. Gerüstbildner gegeben werden.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Ganz besonders bevorzugt ist der Aschenkrustenstabilisator Titandioxid.

Die zusätzlichen Aschekrustenstabilisatoren sind vorzugsweise in einer Menge von 7 bis 15 Gew.-%, bevorzugt 8 bis 14 Gew.-% und stärker bevorzugt 9 bis 13 Gew.-%, bezogen auf das Gesamtgewicht der Zusammensetzung, in der intumeszierenden Zusammensetzung enthalten.

### Additive

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, *Polym. Int.* **2004,** *53*, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Die Zusammensetzung kann neben den erwähnten Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der *p*-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. XanthanGummi.

Die zusätzlichen Additive können der intumeszierenden Zusammensetzung in einer Gesamtmenge, also alle Additive zusammen, von 0,2 bis 3,0 Gew.-%, bezogen auf das Gesamtgewicht der Zusammensetzung, zugegeben werden.

Die erfindungsgemäße Zusammensetzung kann als Zwei- oder mehrkomponenten-System konfektioniert werden.

Die einzelnen Bestandteile der intumeszierenden Zusammensetzung werden so auf die Komponenten aufgeteilt, dass bei Lagerung keine Reaktion eintreten kann, welche die Lagerfähigkeit des Systems beeinträchtigt.

In einer bevorzugten Ausführungsform der Erfindung ist die erfindungsgemäße Zusammensetzung als Zweikomponenten-System konfektioniert, wobei die mindestens eine Verbindung (a) und die mindestens eine Verbindung (b) reaktionsinhibierend getrennt angeordnet und damit reaktionsinhibierend auf zwei Komponenten aufgeteilt sind. Dementsprechend enthält eine erste Komponente, die Komponente I, die Verbindung (a) und eine zweite Komponente, die Komponente II, die mindestens eine Verbindung (b).

Das dämmschichtbildende Additiv kann dabei als Gesamtmischung oder in Einzelkomponenten aufgeteilt in einer Komponente oder mehreren Komponenten enthalten sein. Dessen Aufteilung erfolgt abhängig von der Verträglichkeit der in der Zusammensetzung enthaltenen Verbindungen, so dass weder eine Reaktion der in der Zusammensetzung enthaltenen Verbindungen miteinander bzw. eine gegenseitige Störung erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung. Enthält die Zusammensetzung ferner einen Aschekrustenstabilisator, ist dieser derart auf die Komponenten aufgeteilt, dass eine der Komponenten zumindest einen Teil des Aschekrustenstabilisators enthält und die jeweils andere Komponente gegebenenfalls einen weiteren Teil des Aschekrustenstabilisators enthält.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine schnelle Aushärtung durch eine Additionsreaktion und damit nicht notwendige Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)wasser oder Staub und Schmutz, welche in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils bleibt die Zusammensetzung einfach zu verarbeiten, insbesondere durch gängige Sprühverfahren. Aufgrund des niedrigen Erweichungspunktes des Bindemittels und des hohen Feststoffanteils, ist selbst bei geringer Schichtdicke die Expansionsrate bei Hitzeeinwirkung hoch.

Deshalb ist die erfindungsgemäße zwei- oder mehrkomponentige Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

### AUSFÜHRUNGSBEISPIELE

Folgende Bestandteile wurden in den Beispielen verwendet:

| **Compound** | **Trade Name** | **Supplier** |
|---|---|---|
| Bisphenol-F-diglycidylether | Epilox^{®} F 17-00 | Leuna-Harze GmbH |
| Butandioldiglycidylether | Araldite^{®} DY 026 | Huntsman Corporation |
| Aliphatisches Amidoamin Härtungsmittel | Ancamide^{®} 503 | Evonik Industries |
| 1,3-Bis(aminomethyl)cyclohexan | 1,3-BAC | Itochu |
| Polyetheramin | Jeffamine^{®} D-400 | Huntsman Corporation |
| Tris(dimethylaminomethyl)phenol | Ancamine^{®} K54 | Evonik Industries |
| 1,2-Cyclohexandicarbonsäurediisononylester | Hexamoll^{®} DINCH | BASF SE |
| Tri-iso-butylphosphat | Tri-iso-butylphosphat | Lanxess AG |
| Benetzungsmittel | BYK-W 9010 | BYK |
| Ammoniumpolyphosphat | Exolit^{®} AP 462 | Clariant AG |
| Ammoniumpolyphosphat | Exolit^{®} AP 422 | Clariant AG |
| Melamin | Melafine^{®} | OCI N.V. |
| Titandioxi | Kronos^{®} 2056 | Kronos incorporated |
| Pyrogene Kieselsäure | CAB-O-SIL^{®} TS-720 | Cabot Corporation |
| Mineralfasern | Roxul^{®} 1000 Rockforce MS675 | ROCKWOOL B.V. |
| Pentaerythritol | Charmor^{™} PM40 | Perstorp AB |
| China Clay | Polwhite^{™} E | Imerys S.A. |

Für die Herstellung von erfindungsgemäßen dämmschichtbildenden Zusammensetzungen werden wie nachfolgend angegeben die Einzelkomponenten (Beispiel 1 und Beispiel 2) mit Hilfe eines Dissolvers vermengt und homogenisiert.

Es wurden die Dauer bis zum Ausfall (Time To Failure (TTF)) und Härte der Aschekruste, jeweils wie folgt beschrieben, bestimmt. Ferner wurde die Struktur der Aschekruste durch visuelle Betrachtung beurteilt.

### Bestimmung der TTF

Die TTF wurde mittels Brandtests in einem Plattentestofen bestimmt. Die mit dem intumeszierenden Material beschichteten Stahlplatten werden mittels Einheitstemperaturkuve (ETK) einer Flamme ausgesetzt. Vor Startpunkt t = 0 min wird die Temperatur an mehreren Stellen an der Rückseite der Platte verfolgt. Erreicht der Durchschnitt der drei Thermosensoren die kritische Temperatur (EN = 550 °C, ASTM = 538°C) gilt die Zeitspanne als erreichte Widerstandsfähigkeit bei der definierten Schichtdicke.

### Bestimmung der Härte der Aschekruste

Die Härte und Stabilität der Aschekruste werden hauptsächlich über die visuelle und manuelle Analyse bestimmt. Zudem werden Querschnitte der Aschekruste geschnitten, um so die Zellstruktur der Asche zu bestimmen.

**Beispiel 1:**

| **Name** | **Gew.-%** |
|---|---|
| Jeffamine^{®} D 400 | 1,09 |
| 1,3-BAC | 3,92 |
| Ancamine^{®} K54 | 1,00 |
| Epilox^{®} F 17-00 | 20,00 |
| Araldite^{®} DY-026 | 2,49 |
| Hexamoll^{®} DINCH | XX ¹⁾ |
| Tri-iso-butylphosphat | 5,00 |
| BYK-W 9010 | 0,50 |
| Kronos^{®} 2056 Titanium Oxide | 12,00 |
| Melafine^{®} | 12,00 |
| Charmor^{™} PM 40 | 2,50 |
| Polwhite^{™} E | 2,50 |
| Cab-O-Sil^{®} TS-720 | 1,00 |
| Rockforce^{®} MS675 | 1,00 |
| Exolit^{®} AP 42235,00 | |

| | |
|---|---|
| ¹⁾ Menge siehe Tabelle 1 | |

**Tabelle 1: Ergebnisse der Bestimmung der TTF, der Härte und der Begutachtung der Aschestruktur der Formulierungen nach Beispiel 1**

| **Anteil Weichmacher [Gew.-%]** | **TTF** | **Härte** | **Aschestruktur** |
|---|---|---|---|
| 0 | 90 | 88,8 | spröde, laminar |
| 2,5 | 97 | 85 | weich, regelmäßiger |
| 5 | 97 | 83 | weich, regelmäßiger |
| 10 | 74 | 80 | weich, gleichmäßiger |

**Beispiel 2:**

| **Name** | **Gew.-%** |
|---|---|
| Kronos^{®} 2056 Titanium Oxide | 11,47 |
| Cab-O-Sil^{®} TS-720 | 1,14 |
| Epilox^{®} F 17-00 | 19,10 |
| Polwhite^{™} E | 3,41 |
| Ancamide^{®} 503 Curing Agent | 4,30 |
| Melafine^{®} | 11,47 |
| 1,3-BAC | 1,63 |
| Rockforce^{®} MS675 | 1,14 |
| Exolit^{®} AP 46234,21 | |
| Charmor^{™} PM 40 | 3,41 |
| Hexamoll^{®} DINCH | XX ²⁾ |
| Ancamine^{®} K54 | 1,14 |
| Tri-iso-butylphosphat | 4,74 |

| | |
|---|---|
| ²⁾ siehe Tabelle 2 | |

**Tabelle 2: Ergebnisse der Bestimmung der TTF, der Härte und der Begutachtung der Aschestruktur der Formulierungen nach Beispiel 2**

| **Anteil Weichmacher [Gew.-%]** | **TTF** | **Härte** | **Aschestruktur** |
|---|---|---|---|
| 0 | 87 | 86,5 | spröde, laminar |
| 2,5 | 93 | 87 | weich, gleichmäßiger |
| 5 | 98 | 87 | weich, gleichmäßiger |
| 10 | 81 | 80,5 | weich, gleichmäßiger |

## Patentansprüche

**1.** Intumeszierende Zusammensetzung, enthaltend
(a) wenigstens eine Verbindung mit wenigstens zwei Epoxidgruppen,
(b) wenigstens eine Verbindung mit mindestens zwei Aminogruppen, die mit den Epoxidgruppen reagieren können,
(c-1) Intumeszenzadditive ausgewählt aus der Gruppe bestehend aus Treibmittel und Dehydrierungskatalysator und Kombinationen davon und/oder
(c-2) eine thermisch expandierbare Verbindung und
(d) wenigstens einen Weichmacher,
wobei die ausgehärtete Zusammensetzung im Brandfall eine isolierende Schicht bildet.

**2.** Intumeszierende Zusammensetzung nach Anspruch 1, wobei der Weichmacher aus der Gruppe bestehend aus Derivaten der Benzoesäure, Phthalsäure, Trimellitsäure, Pyromellitsäure, Adipinsäure, Sebacinsäure, Fumarsäure, Maleinsäure, Itaconsäure, Phophorsäure und Zitronensäure, Alkylphosphatestern und Derivaten von Polyestern, Polyethern und Epoxiden, C₁₀-C₂₁-Alkylsulfonsäureestern des Phenols, Polyestern, erhältlich aus linearen oder verzweigten, gesättigten oder ungesättigten C₆-C₂₁-Monocarbonsäuren und multifunktionellen Alkoholen und deren ethoxylierten Derivaten, und alicyclischen Carbonsäureestern sowie Mischung aus zwei oder mehreren davon ausgewählt ist.

**3.** Intumeszierende Zusammensetzung nach Anspruch 2, wobei der Weichmacher aus der Gruppe bestehend aus Phophorsäureestern, Citratestern und Phthalaten ausgewählt ist.

**4.** Intumeszierende Zusammensetzung nach Anspruch 3, wobei der Weichmacher 1,2-Cyclohexandicarbonsäurediisononylester ist.

**5.** Intumeszierende Zusammensetzung nach einem der vorhergehenden Ansprüche, in der der Weichmacher in einem Anteil von 2 Gew.-% bis 10 Gew.-%, bezogen auf das Gesamtgewicht der intumeszierende Zusammensetzung, enthaltend ist.

**6.** Intumeszierende Zusammensetzung nach einem der vorhergehenden Ansprüche, wobei die Intumeszenzadditive (c-1) ferner einen Kohlenstofflieferanten umfassen

**7.** Intumeszierende Zusammensetzung nach einem der vorhergehenden Ansprüche, wobei die wenigstens eine Verbindung mit mindestens zwei Aminogruppen aus der Gruppe bestehend aus Ethylendiamin, Propylendiamin, Butylendiamin, Pentamethylendiamin, Hexamethylendiamin, Decamethylendiamin, 4,7-Dioxadecan-1,10-diamin, Dodecamethylendiamin, 4,9-Dioxadodecan-1,12-diamin, 7-Methyl-4,10-dioxatridecane-1,13-diamin, 1,2-Diaminocyclohexan, 1,4-Diaminocyclohexan, 4,4'-Diaminodicyclohexylmethan, 1,3-Bis(aminomethyl)-cyclohexan (1,3-BAC), 1,2-Bis(aminomethyl)cyclohexan (1,2-BAC), Hexamethylendiamin (HMD), 1,2- und 1,4-Diaminocyclohexan (1,2-DACH und 1,4-DACH), Isophorondiamin, Bis(3-methyl-4-aminocyclohexyl)methan, Harnstoff, 2,2-Bis(4-aminocyclohexyl)propan, 3-Amino-1-(methylamino)-propan, 3-Amino-1-(cyclohexylamino)propan und N-(2-Hydroxyethyl)ethylendiamin, Polyetheraminen, Amidgruppen-haltige aliphatische Polyamine und Mischungen aus zwei oder mehreren davon ausgewählt ist.

**8.** Intumeszierende Zusammensetzung nach einem der vorhergehenden Ansprüche, wobei das Treibmittel aus der Gruppe bestehend aus Cyanursäure, Isocyansäure und deren Derivaten, Melamin und deren Derivaten und Kombinationen davon ausgewählt ist.

**9.** Intumeszierende Zusammensetzung nach einem der vorhergehenden Ansprüche, wobei der Dehydrierungskatalysator aus der Gruppe bestehend aus einem Salz oder einem Ester einer anorganischen, nicht flüchtigen Säure, ausgewählt unter Schwefelsäure, Phosphorsäure oder Borsäure, und Kombinationen davon ausgewählt ist.

**10.** Intumeszierende Zusammensetzung nach einem der vorhergehenden Ansprüche, wobei der Kohlestofflieferant aus der Gruppe bestehend aus Stärke, modifizierter Stärke, mehrwertigen Alkoholen, thermoplastischen oder duroplastischen polymeren Harzbindemitteln und Kombinationen davon ausgewählt ist.

**11.** Intumeszierende Zusammensetzung nach einem der vorhergehenden Ansprüche, wobei die thermisch expandierbare Verbindung unter Graphit-Intercallationsverbindungen und Vermiculiten, insbesondere Graphit-Intercallationsverbindungen ausgewählt ist.

**12.** Verwendung eines Weichmachers in einer intumeszierenden Zusammensetzung zur Verbesserung der Stabilität und der Struktur der Aschekruste, wodurch die isolierende Wirkung einer im Brandfall aus der intumeszierenden Zusammensetzung gebildeten Aschekruste verbessert wird.

**13.** Verwendung nach Anspruch 12, wobei der Weichmacher aus der Gruppe bestehend aus Derivaten der Benzoesäure, Phthalsäure, Trimellitsäure, Pyromellitsäure, Adipinsäure, Sebacinsäure, Fumarsäure, Maleinsäure, Itaconsäure, Phophorsäure und Zitronensäure, Alkylphosphatestern und Derivaten von Polyestern, Polyethern und Epoxiden, C₁₀-C₂₁-Alkylsulfonsäureestern des Phenols, Polyestern, erhältlich aus linearen oder verzweigten, gesättigten oder ungesättigten C₆-C₂₁-Monocarbonsäuren und multifunktionellen Alkoholen und deren ethoxylierten Derivaten, und alicyclischen Carbonsäureestern sowie Mischung aus zwei oder mehreren davon ausgewählt ist.

**14.** Verwendung nach Anspruch 13, wobei der Weichmacher 1,2-Cyclohexandicarbonsäurediisononylester ist.

**15.** Verwendung nach einem der Ansprüche 12 bis 14, wobei der Weichmacher in einem Anteil von etwa 2 Gew.-% bis etwa 10 Gew.-%, bezogen auf das Gesamtgewicht der intumeszierenden Zusammensetzung, in der intumeszierenden Zusammensetzung enthaltend ist.

**15.** Verwendung einer intumeszierenden Zusammensetzung nach einem der Ansprüche 1 bis 11, zur Beschichtung von Bauteilen, insbesondere als Brandschutzbeschichtung.
